(19) Europäisches Patentamt
European Patent Office
Office européen des brevets

(11) Veröffentlichungsnummer: **0 008 074**
**A1**

# (12) EUROPÄISCHE PATENTANMELDUNG

(21) Anmeldenummer: **79102755.0**

(22) Anmeldetag: **01.08.79**

(51) Int. Cl.³: **C 02 F 1/72**, C 02 F 9/00

(30) Priorität: **12.08.78 DE 2835496**

(43) Veröffentlichungstag der Anmeldung: **20.02.80**
**Patentblatt 80/4**

(84) Benannte Vertragsstaaten: **BE CH DE FR GB IT NL**

(71) Anmelder: **BAYER Aktiengesellschaft, Zentralbereich Patente,Marken und Lizenzen Bayerwerk, D-5090 Leverkusen 1 (DE)**

(72) Erfinder: **Rudolph, Jörg, Carl-Duisberg-Strasse 310, D-5090 Leverkusen 1 (DE)**
Erfinder: **Mann, Theo, Dr., Blumenstrasse 18, D-4010 Langenfeld (DE)**
Erfinder: **Heine, Kurt, Dr., Berliner Strasse 36, D-5340 Bad Honnef (DE)**
Erfinder: **Szieleit, Hans-Jürgen, Dr., Hahnenweg 5, D-5000 Köln 80 (DE)**

## (54) Verfahren zur chemisch-biologischen Behandlung von Abwasser.

(57) Die vorliegende Erfindung betrifft ein Verfahren zur biologischen Behandlung von Abwasser, wobei man das Abwasser mit Wasserstoffperoxid in Gegenwart von Metallen, die aus Wasserstoffperoxid Hydroxylradikale freisetzen, bei Temperaturen von 5 bis 100° C und pH-Werten von 0 bis 7 unter Verringerung des CSB-Gehaltes des Abwassers behandelt, indem man Wasserstoffperoxid in Mengen von 0,1 bis 1,7 g, bezogen auf die CSB-Konzentration in g/l des Abwassers, und Hydroxylradikale freisetzende Metallionen in Mengen von 0,01 bis 1 Mol pro Mol Wasserstoffperoxid auf das Abwasser einwirken läßt, anschliessend, gegebenenfalls unter Flockung und Entfernung des Geflockten, neutralisiert und das erhaltene Abwasser einer biologischen Abwasserreinigung nach dem Belebtschlammverfahren unterzieht.

EP 0 008 074 A1

BAYER AKTIENGESELLSCHAFT 5090 Leverkusen, Bayerwerk
Zentralbereich
Patente, Marken und Lizenzen Gr/bc

## Verfahren zur chemisch-biologischen Behandlung von Abwasser

Abwasserinhaltsstoffe, die den biologischen Abbau stören und solche, die biologisch schwer abbaubar sind, können nach den bekannten Verfahren der chemischen bzw. physikalisch-chemischen Abwasserreinigung eliminiert werden. Zu derartigen Abwasserinhaltstoffen gehören beispielsweise Ligninsulfonsäuren, Naphthalinsulfonsäuren, Farbstoffe sowie chlorierte und nitrierte aromatische Verbindungen.

Zu den bekannten physikalisch-chemischen Abwasserreinigungsverfahren gehören die Adsorption an Aktivkohle und die Flokkulationsadsorption an Eisen(III)-hydroxid oder Aluminiumhydroxid. Behandelt man Färbereiabwässer, die außer Farbstoffen noch Tenside und Salze enthalten, nach den vorgenannten Verfahren, muß man mit unerwünschten Wechselwirkungen rechnen. Bei der Adsorption kommt es zu einer Konkurrenz zwischen Farbstoff und Tensid. Dadurch kann die Kapazität der Aktivkohle für die Entfärbung unter Umständen auf weniger als 1/10 des Wertes für eine reine Farbstofflösung zurückgehen. Bei der Flokkulationsadsorption wird bei Anwesenheit von Tensiden nicht nur die Farbstoffadsorption behindert, sondern auch die Sedimentation der Eisen(III)-hydroxid- bzw. Aluminiumhydroxidflocken dadurch verschlechtert, daß die Flocken sehr fein ausfallen. Sind Komplexbildner im Abwasser vorhanden, müssen bei der Flokkulationsadsorption erhöhte Mengen an Eisen-(III)- bzw. Aluminiumsalzen zudosiert werden, da andernfalls die Flockung inhibiert wird. Darüber hinaus werden kationische Farbstoffe nicht durch Eisen(III)-hydroxid bzw. Aluminiumhydroxid adsorbiert.

Das bekannte Verfahren der Abwasserverbrennung kommt nur bei solchen Konzentrationen an organischen Substanzen im Abwasser in Frage, bei denen sich wegen eines hohen Heizwertes des Abwassers die hohen Betriebskosten deutlich senken lassen.

Als bekannte chemische Oxidationsmittel werden bei der Abwasserreinigung Chlorbleichlauge, Ozon und Wasserstoffperoxid verwendet. Beim Einsatz von Chlorbleichlauge als Oxidationsmittel können neben den Oxidationsreaktionen auch Chlorierungsreaktionen ablaufen, wobei Reaktionsprodukte entstehen können, welche die Umwelt stärker belasten als die ursprünglichen Abwasserinhaltsstoffe. Wegen der hohen Investitions- und Betriebskosten findet

Ozon vorwiegend bei der Trinkwasseraufbereitung, d.h. bei niedrigen Konzentrationen Anwendung. Außerdem müssen bei Ozon besondere Sicherheitsvorkehrungen getroffen werden. Wasserstoffperoxid ist als Oxidationsmittel häufig nicht reaktiv genug. Viele Farbstoffe werden durch Wasserstoffperoxid nicht entfärbt, da das Oxidationspotential gemäß der nachfolgenden Formel (I) zu niedrig ist.

$$H_2O_2 + 2H^+ + 2e^- \longrightarrow 2H_2O \qquad E_o = 1,78\ V \qquad (I)$$

In Gegenwart spezieller Metallionen wie beispielsweise zweiwertigem Eisen lassen sich aus Wasserstoffperoxid OH-Radikale gemäß nachfolgender Formel (II) herstellen, die gemäß Formel (III) eines der stärksten Oxidationsmittel darstellen:

$$Fe^{++} + H_2O_2 \longrightarrow Fe^{+++} + OH + OH^- \qquad (II)$$

$$OH + H^+ + e^- \longrightarrow H_2O \qquad E_o = 2,24\ V \qquad (III)$$

Ziel der vorliegenden Erfindung ist eine weitgehende CSB-Elimination spezieller Abwässer, insbesondere solcher Abwässer, die Abwasserinhaltstoffe enthalten, die den biologischen Abbau stören oder die biologisch schwer abbaubar sind.

Vorzugsweise soll das erfindungsgemäße Verfahren bei Abwässern mit einem CSB-$BSB_5$-Verhältnis von 1,5 und höher anwendbar sein. Zu den biologisch schwer bzw. nicht abbaubaren Abwasserinhaltstoffen gehören beispielsweise Farbstoffe, Tenside, nitrierte, chlorierte und sulfonierte Aromaten der Benzol-, Naphthalin- und Anthracenreihe sowie Mercaptoverbindugnen.

Gegenstand der vorliegenden Erfindung ist ein Verfahren zur biologischen Behandlung von Abwasser, wobei man das Abwasser mit Wasserstoffperoxid in Gegenwart von Metallen, die aus Wasserstoffperoxid Hydroxylradikale freisetzen, bei Temperaturen von 5 bis 100°C und pH-Werten von 0 bis 7 unter Verringerung des CSB-Gehaltes des Abwassers behandelt, das dadurch gekennzeichnet ist, daß man Wasserstoffperoxid in Mengen von 0,1 bis 1,7 g, vorzugsweise von 0,1 bis 1,3 g, bezogen auf die CSB-Konzentration in g/l des Abwassers, und Hydroxylradikale freisetzender Metallionen in Mengen von 0,01 bis 1 Mol, vorzugsweise 0,05 bis 0,2 Mol pro Mol Wasserstoffperoxid auf das Abwasser einwirken läßt, anschließend, gegebenenfalls unter Flockung und Entfernung des Geflockten, neutralisiert und das erhaltene Abwasser einer biologischen Abwasserreinigung nach dem Belebtschlammverfahren unterzieht.

Das Molverhältnis Fe II/$H_2O_2$ richtet sich nach der Reaktionstemperatur, der Oxidierbarkeit des Abwassers und dem gewünschten Flockungseffekt bei der Neutralisation. Im Temperaturbereich 15 - 25°C und normal oxidierbarem Abwasser arbeitet man besonders bevorzugt mit Molverhältnissen Fe II/$H_2O_2$ von 0,03 bis 0,1. Bei Temperaturen von 40 - 60°C sind geringere Katalysatormengen nötig (Molverhältnis Fe II/$H_2O_2$ von 0,001 - 0,02). Schwer oxidierbare Substanzen wie z.B. Pyridin erfordern eine höhere Katalysatorendosierung von Fe II/$H_2O_2$ wie 0,1 - 1,0.

Wird der CSB des Abwassers ausschließlich durch Benzolderivate und Naphthalinderivate verursacht, sollte Wasserstoffperoxid in Mengen von 0,9 bis 1,7 g bezogen auf 1 g CSB dosiert werden, da bei geringerer Dosierung Oxidationsprodukte mit bakтericider oder bakteriostatischer Wirkung entstehen.

Erfindungsgemäß sollen bei der chemisch-oxidativen Verfahrensstufe unter möglichst großer Ausnutzung des Oxidationsvermögens von Wasserstoffperoxid evtl. bestehende Schadwirkungen des Abwassers gegen Bakterien erniedrigt oder beseitigt und/oder biolgisch schwer abbaubare Stoffe in biologisch abbaubare Stoffe überführt werden.

Als Hydroxylradikal-freisetzende Metallionen im Sinne der vorliegenden Erfindung sind geeignet Eisen(II)-, Eisen (III)-, Kupfer(I)-, Kupfer(II)-, Aluminium(III)-ionen in Mengen von etwa 0,01 bis 1 Mol, vorzugsweise 0,03 bis 0,2 Mol pro Mol Wasserstoffperoxid; vorzugsweise werden Eisen(II)-ionen eingesetzt.

Die alleinige Oxidation mittels Wasserstoffperoxid in Gegenwart von Eisen(II) führt nicht zu einer vollständigen CSB-Elimination. So ist z.B. bei Phenol nur eine ca. 75 %ige CSB-Entfernung möglich. Es resultieren Oxidationsprodukte wie Essigsäure, Ameisensäure, Malonsäure und Oxalsäure, die von Wasserstoffperoxid nur sehr langsam und unter teilweisem autokatalytischem Zerfall von Wasserstoffperoxid weiteroxidiert werden.

Eine möglichst weitgehende CSB-Entfernung in der ersten chemisch-oxidativen Stufe ist aber erfindungsgemäß aus Kostengründen nicht erstrebenswert, die Oxidation sollte hier nur soweit gehen, daß die Oxidationsprodukte in der anschließenden zweiten biologischen Behandlungsstufe leicht abbaubar sind.

Neben der Einführung von Sauerstoff in organische Substanzen kommt es bei der radikalischen Oxidation mittels Wasserstoffperoxid zu Kondensations- und Polymerisationsreaktionen, d.h. zur Bildung unlöslicher organischer Niederschläge. Andererseits werden aromatische Ringsystem aufgespalten und das organische Gerüst teilweise zu den Endprodukten Kohlendioxid und Wasser totaloxidiert. Durch die vorgenannten Reaktionen wird der DOC (dissolved organic carbon) des Abwassers erniedrigt. Im allgemeinen liegt die DOC-Elimination unter der CSB-Elimination.

Substituenten, wie -Cl, $-SO_3H$ und $-NO_2$ werden bei der Oxidation mit Wasserstoffperoxid in Gegenwart von beispielsweise Eisen(II)-ionen abgespalten; damit einher geht häufig eine Verringerung der Bakterien- und Fischtoxizität.

Im pH-Bereich 2,5 - 3,5 ist die Oxidationsgeschwindigkeit des Systems $H_2O_2$/Fe II am größten, die Wasserstoffperoxidnutzung d. h. Wasserstoffperoxidverbrauch/CSB-Elimination am höchsten und die Wasserstoffperoxidkonzentration am Ende der Oxidation am niedrigsten. Letzteres ist besonders wichtig für eine nachfolgende biologische Behandlung beispielsweise nach dem Belebtschlammverfahren. Im allgemeinen können bei der biolgischen Behandlung nur Wasserstoffperoxidkonzentrationen $<$ 150 mg/l toleriert werden.

Nach einer Variante des erfindungsgemäßen Verfahrens kann man die Oxidation in Gegenwart von Eisen(II)-ionen in einem breiteren pH-Bereich durchführen, wenn man die Eisen-(II)-ionen in Form von Komplexen stabilisiert. Die Eisen-(II)-ionen können dabei entweder als lösliche Komplexe oder auf einem Festbettkomplex gebunden vorliegen. Als lösliche Komplexbildner sind z.B. Aminopolycarbonsäuren wie Äthylendiamintetraessigsäure, Nitrilotriessigsäure, Diäthylentetraminpentaessigsäure oder andere Verbindungen wie Triäthanolamin, Harnsäure, Tetramethylenharnstoff, 1,10-Phenantrolin, Ferroin geeignet, während als Festbett z.B. ein komplexbildender Ionenaustauscher, der mit Eisen (II) ionen beladen ist, verwendet werden kann. Als Ionenaustauscher kann beispielsweise ein Kationenaustauscher dienen, der ionenaustauschaktive Aminocarbonsäure- und/oder Iminocarbonsäuregruppen enthält, wie beispielsweise beschrieben in der britischen Patentschrift 767 821. Vorzugsweise werden Kationenaustauscher eingesetzt, die Iminoessigsäuregruppen enthalten. In diesem Fall kann man bei pH-Werten von 0 bis 7, vorzugsweise 3 bis 7, arbeiten.

Anstelle von Eisen(II)-ionen können auch andere Metallionen, die in der Lage sind, aus Wasserstoffperoxid OH-Radikale freizusetzen, als Katalysator verwendet werden, wie z.B. Kupfer(I). Bei Verwendung von Kupfer(I)-salzen liegt der optimale pH-Bereich zwischen 2,5 und 5,0. In einer weiteren Variante des erfindungsgemäßen Verfahrens kann die Oxidation in Gegenwart von Kupfer(I)-ionen in einem breiteren pH-Bereich durchgeführt werden, wenn man die Kupfer(I)-ionen komplexiert. Hierbei ist z.B. die Komplexierung auf einem festen Träger der gleichen Konstitution möglich, wie zuvor für Eisen(II) beschrieben oder mittels löslicher Komplexbildner. Eine wirksame Oxidation ist im pH-Bereich 2 bis 7 möglich; der bevorzugte pH-Bereich liegt zwischen 5,5 und 7.

Zu den bevorzugten löslichen Komplexbildnern gehören Tetramethylharnstoff, N,N-Dimethylharnstoff, 3-Aminopropansäure, 1,2,3-Benzotriazin(4)on, Triäthylentetramin, 2,3-Pentandion-2-oxim, 1,2-Diaminoäthan, Harnsäure, Triäthanolamin, Diazol.

Die katalytische Oxidation des Wasserstoffperoxid spielt sich in 2 Stufen ab:

In einer schnelleren Reaktion

$$Me^{+n} + H_2O_2 \xrightarrow{k_1} Me^{+n+1} + OH^- + \cdot OH \qquad (IV)$$

und in einer langsameren Reaktion

$$Me^{+n+1} + H_2O_2 \xrightarrow{k_2} Me^{+n} + HO_2\cdot + H^+ \qquad (V)$$

Folgereaktionen von Gleichung(V) sind u.a.

$$2HO_2\cdot \longrightarrow H_2O_2 + O_2 \qquad (VI)$$

$$HO_2\cdot + H_2O_2 \longrightarrow H_2O + O_2 + \cdot OH \qquad (VII)$$

Aus den Reaktionen (VI) und (VII) wird ersichtlich, das bei fortgeschrittener Wasserstoffperoxiddosierung der autokatalytische Zerfall (Bildung von molekularem Sauerstoff) von Wasserstoffperoxid mit der Oxidation der Wasserinhaltstoffe durch Wasserstoffperoxid konkurriert.

Bei einer Variante des erfindungsgemäßen Verfahrens mißt man den Sauerstoffgehalt in dem zu behandelnden Abwasser mit einer speziellen Meßsonde und steuert darüber die Peroxidzugabe. Den unteren Schaltpunkt, d.h. die Zugabe von Wasserstoffperoxid legt man dabei vorzugsweise auf einen Sauerstoffgehalt von 0 bis 0,8 mg/l $O_2$ und den oberen Schaltpunkt, d. h. Stoppen der Wasserstoffperoxidzugabe, auf einen Sauerstoffgehalt von 1,0 bis 10,0, vorzugsweise von 1 bis 2 mg/l $O_2$. Zum Anfahren legt man den oberen Schaltpunkt auf einen höheren Wert als zum betreffenden Zeitpunkt den Sauerstoffgehalt in Lösung entspricht.

Die verwendeten Meßsonden arbeiten beispielsweise nach folgendem Prinzip:

a) Die Meßzelle besteht aus einem Elektrodensystem mit Silberanode-Kaliumchloridgel-Goldkathode, das durch eine sauerstoffdurchlässige Folienmembran von dem zu messenden Medium mechanisch abgeschlossen ist. Wird an die Kathode eine negative Gleichspannung von 0,85 Volt angelegt, so wird sie polarisiert. Der durch die Membran diffundierende Sauerstoff stört nun den Polysarisationsvorgang, da der kathodisch mit dem Elektrolyten unter Elektronenverbrauch nach: $O_2 + 2H_2O + 4e^- \rightarrow 4OH^-$ reagiert. Analog werden an der Anode Elektronen nach $Ag + Cl^- + e^-$ frei. Es ergibt sich somit ein Strom, der dem Partialdruck des anwesenden Sauerstoffs direkt proportional ist.

b) Der Sauerstoff der Probe diffundiert durch eine gasdurchlässige Membran und wird an einer Silberkathode reduziert, wodurch sich Hydroxylionen bilden, die an der Bleianode entladen werden und das Schließen eines

Stromes bewirken, der dem Sauerstoffpartialdruck direkt proportional ist.

Der Einsatz einer Sauerstoff-Meßsonde zur Dosierung von Wasserstoffperoxid bietet eine Reihe von Vorteilen. Da der autokatalytische Zerfall von Wasserstoffperoxid vermieden wird, läßt sich Wasserstoffperoxid einsparen. Alle anderen Verfahren, die Dosierung von Wasserstoffperoxid zu steuern wie Titration mit Permanganat, Jod-Thiosulfat oder die photometrische Bestimmung mit Titanylsulfat stellen den Gehalt an Wasserstoffperoxid fest, vermögen aber nicht zu unterscheiden, wieviel Wasserstoffperoxid radikalisch mit den Abwasserinhaltsstoffen reagiert hat und wieviel Wasserstoffperoxid autokatalytisch zerfallen ist. Die Reaktionszeit der Oxidation ist kurz, da man die Wasserstoffperoxidzugabe nach Beendigung der schnelleren Reaktion (IV) abbricht. Man oxidiert nur mit der reaktivsten Spezies, den OH-Radikalen, die aggressiver sind als die $HO_2$-Radikale . Es wird vermieden, daß nicht umgesetztes Wasserstoffperoxid in die nachgeschaltete biologische Abwasserreinigungsanlage gelangt. Wasserstoffperoxid ist in Gegenwart spezieller Metallionen ein Bakteriengift und kann dazu führen, daß die BSB-Elimination in der biologischen Stufe auf bis zu 10 % heruntergeht.

Nach dem erfindungsgemäßen Verfahren schließt sich an die Oxidation mit Wasserstoffperoxid eine Neutralisation an. Dabei werden die im Abwasser vorhandenen Metalle, so z.B. auch das evtl. als Katalysator bei der Oxidation zugegebene Eisen, geflockt. Die Metallhydroxidflocken entstabilisieren die im Abwasser befindlichen Kolloide und adsorbieren echt gelöste Substanzen. Dadurch wird eine weitere CSB-Elimination erzielt. Als Neutralisationsmittel ist Kalkmilch vorteilhaft, da die bei der Oxidation erzeugten carboxylgruppenhaltigen Verbindungen evtl. schwer lösliche Calciumsalze bilden und somit ausgefällt werden, was ebenfalls eine CSB-Eilimination bedeutet. Die bei der Neutralisation geflockten und gefällten Stoffe können vorzugsweise durch Filtrieren, Sedimentation oder Flotation abgetrennt werden.

Nachfolgend wird das erfindungsgemäße Verfahren anhand eines Beispiels erläutert:

<u>Beispiel</u> (Oxidation-biologische Behandlung)

Organisch belastetes Abwasser aus der Produktion von Nitroaromaten enthilet u.a. folgende Komponenten:

| | |
|---|---|
| 2-Nitrotoluol | 50 bis 80 mg/l |
| 3-Nitrotoluol, 4-Nitrotoluol | 40 bis 60 mg/l |
| 2,4-Dinitrotoluol | 60 bis 80 mg/l |
| 2,6-Dinitrotoluol | 30 bis 50 mg/l |
| 2,4-Dinitrobenzoesäure | 0,5 mg/l |
| 2-Nitrobenzoesäure | 0,5 mg/l |
| 3-Nitrobenzoesäure, 4-Nitrobenzoesäure | 5 mg/l |
| 3,5-Dinitro-p-kresol | 100 bis 120 mg/l |
| 3,5-Dinitro-o-kresol | 10 bis 15 mg/l |

Die Summenparameter des Abwassers waren:

| | |
|---|---|
| CSB | 1359 mg/l |
| $BSB_5$ | 44 mg/l |
| DOC | 507 mg/l |
| pH | 1,7 |

Schadwirkung gegen Bakterien (Pseudomonas fluorescens) bis zur Verdünnung 1:2.

Das oben charakterisierte Abwasser wurde folgender chemisch-biologischer Behandlung unterzogen:

1. pH-Einstellung mit Kalkmilch auf pH 2,5
2. Zugabe von
a) 4,9 ml/l $H_2O_2$ (35 %ig)
b) 1,0 g/l $FeSO_4 \cdot 7H_2O$
   Verweilzeit 4 h
   19 °C
3. Neutralisation mit Kalmilch auf pH 8
4. 4 Stunden Sedimentation
5. Belebtschlammverfahren mit 12 h Belüftungszeit und 4 h Sedimentation

Nach der Neutralisation (3) wies das Abwasser folgende Werte auf:

| | | |
|---|---|---|
| CSB | 495 mg/l | ≙ 63,6 % Entfernung |
| $BSB_5$ | 181 mg/l | |
| DOC | 335 mg/l | |

Keine Schadwirkung gegen Bakterien (Pseudomonas fluorescens);und nach der Behandlung in der Belebtschlammanlage

| | | |
|---|---|---|
| CSB | 229 mg/l | ≙ 83,1 % Entfernung |
| $BSB_5$ | 22 mg/l | |
| DOC | 95 mg/l | |

Der Wasserstoffperoxidverbrauch von 4,9 ml/l wurde über die Indizierung mit der Sauerstoff-Elektrode bestimmt.

Außerdem wurden höhere und niedrigere Dosierungen vorgenommen.

Bei niedrigeren Dosierungen wie z.B. 1,8 ml/l Wasserstoffperoxid (≙ 25 % des CSB des Rohabwassers) war die Bakterientoxizität nicht restlos beseitigt und die organischen Abwasserinhaltstoffe für einen biologischen Angriff noch nicht weit genug aufgeschlossen:

| | | |
|---|---|---|
| CSB | 1080 mg/l | ≙ 20,5 % Entfernung |
| $BSB_5$ | 163 mg/l | |
| DOC | 486 mg/l | |

Schadwirkung gegen Bakterien (Pseudomonas fluorescens) bis zur Verdünnung 1:1. Eine höhere Dosierung wie z.B. 14,6 ml/l Wasserstoffperoxid (≙ 200 % des CSB des Rohabwassers) führte zwar ebenfalls zur Entfernung der Bakteriantoxizität, ließ sich die CSB-Entfernung gegenüber dem Einsatz von 4,9 ml nur unwesentlich und unter Zerfall von Wasserstoffperoxid steigern:

| | | |
|---|---|---|
| CSB | 486 mg/l | ≙ 64,2 % Entfernung |
| $BSB_5$ | 141 mg/l | |
| DOC | 315 mg/l | |

Patentansprüche

1) Verfahren zur biologischen Behandlung von Abwasser, wobei man das Abwasser mit Wasserstoffperoxid in Gegenwart von Metallen, die aus Wasserstoffperoxid Hydroxylradikale freisetzen, bei Temperaturen von 5 bis 100°C und pH-Werten von 0 bis 7 unter Verringerung des CSB-Gehaltes des Abwassers behandelt, dadurch gekennzeichnet, daß man Wasserstoffperoxid in Mengen von 0,1 bis 1,7 g, vorzugsweise von 0,1 bis 1,3 g, bezogen auf die CSB-Konzentration in g/l des Abwassers, und Hydroxylradikale freisetzende Metallionen in Mengen von 0,01 bis 1 Mol, vorzugsweise 0,05 bis 0,2 Mol pro Mol Wasserstoffperoxid auf das Abwasser einwirken läßt, anschließend, gegebenenfalls unter Flokkung und Entfernung des Geflockten, neutralisiert und das erhaltene Abwasser einer biologischen Abwasserreinigung nach dem Belebtschlammverfahren unterzieht.

2) Verfahren gemäß Anspruch 1, dadurch gekennzeichnet, daß die Dosierung von Wasserstoffperoxid über den Sauerstoffgehalt in der Lösung gesteuert wird.

Europäisches Patentamt

# EUROPÄISCHER RECHERCHENBERICHT

0008074
Nummer der Anmeldung
EP 79 10 2755

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 703 267 (DEUTSCHE GOLD- UND SILBER-SCHEIDEANSTALT) * Seite 2, Zeilen 1-11; Seite 7, Zeilen 14-27; Seite 9, Zeile 4 - Seite 10, Zeile 14 * | 1 |
| | -- | |
| X | DE - A - 2 236 504 (G. SIEGMUND) * Seiten 4,5; Ansprüche 1-3; Seite 2, letzter Absatz * | 2 |
| | -- | |
| A | DE - A - 2 211 890 (G. SIEGMUND) | |
| A | DE - A - 2 703 268 (DEUTSCHE GOLD- UND SILBER-SCHEIDEANSTALT) | |
| A | DE - A - 2 521 893 (SCA DEVELOPMENT) | |
| A | DE - A - 2 604 484 (SUMITOMO CHEMICAL) | |
| | ---- | |

KLASSIFIKATION DER ANMELDUNG (Int.Cl. ³)

C 02 F 1/72
C 02 F 9/00

RECHERCHIERTE SACHGEBIETE (Int. Cl. ³)

C 02 F 1/72
9/00

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 15-11-1979 | TEPLY |